(19) **Europäisches Patentamt / European Patent Office / Office européen des brevets**

(11) **EP 2 208 804 B1**

(12) **FASCICULE DE BREVET EUROPEEN**

(45) Date de publication et mention
de la délivrance du brevet:
**26.02.2014 Bulletin 2014/09**

(21) Numéro de dépôt: **09305730.5**

(22) Date de dépôt: **03.08.2009**

(51) Int Cl.:
*C22C 38/22* *(2006.01)*    *C22C 38/02* *(2006.01)*
*C22C 38/04* *(2006.01)*    *C22C 38/18* *(2006.01)*
*C22C 38/00* *(2006.01)*    *C22C 38/06* *(2006.01)*
*C22C 38/44* *(2006.01)*    *C22C 38/48* *(2006.01)*
*C22C 38/50* *(2006.01)*

(54) **Acier, notamment pour roulements et pièces mécaniques aptes à la cémentation ou à la carbonitruration, et pièces réalisées avec cet acier.**

Stahl, insbesondere zum Walzen und für mechanische Teile, die sich zum Zementieren oder Karbonitrieren eignen, und aus diesem Stahl hergestellte Teile

Steel, in particular for bearings and mechanical elements suitable for carburisation or carbonitridation, and parts made using this steel

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **12.09.2008 FR 0856155**

(43) Date de publication de la demande:
**21.07.2010 Bulletin 2010/29**

(73) Titulaire: **ASCOMETAL**
**92400 Courbevoie (FR)**

(72) Inventeurs:
• **Cezard, Pierre**
**57070, METZ (FR)**
• **Daguier, Pascal**
**57685, AUGNY (FR)**

(74) Mandataire: **Jacobson, Claude**
**Cabinet Lavoix**
**2, Place d'Estienne d'Orves**
**75441 Paris Cedex 09 (FR)**

(56) Documents cités:
**EP-A- 0 890 653**    **EP-A- 1 595 966**
**EP-B- 0 972 090**    **WO-A-00/23632**
**WO-A-2005/098070**    **GB-A- 2 284 616**
**JP-A- 4 247 848**    **JP-A- 59 123 743**
**JP-A- 62 214 158**

• **COOK W T ET AL: "CALCULATED HARDENABILITY FOR IMPROVED CONSISTENCY OF PROPERTIES IN HEAT TREATABLE ENGINEERING STEELS" JOURNAL OF MATERIALS ENGINEERING AND PERFORMANCE, ASM INTERNATIONAL, MATERIALS PARK, OH, US, vol. 6, no. 4, 1 août 1997 (1997-08-01), pages 443-448, XP000736416 ISSN: 1059-9495**

**Description**

L'invention concerne le domaine de la sidérurgie, et plus particulièrement :

- les aciers pour roulements utilisés dans des conditions sévères, tels que les roulements de boite de vitesses et les roulements utilisés dans le domaine de l'éolien ;
- les aciers permettant une amélioration la durée de vie des roulements quels qu'ils soient par rapport à des nuances de référence tels que les nuances 4320/3311 ;
- les aciers pour roulements chargés de grande dimension tels que les nuances de type 100CrMo7-3 ;
- les aciers pour pièces mécaniques de grandes dimensions, pour lesquelles il faut limiter la déformation de la pièce au cours d'un traitement de trempe.

Les aciers utilisés pour la fabrication de roulements, en particulier les roulements de grandes dimensions (de l'ordre de 300 à 1500 mm), doivent être élaborés de manière à obtenir une grande qualité inclusionnaire. Autrement dit, la population des inclusions non métalliques présentes dans ces aciers (notamment les inclusions d'oxydes, subsistant après la désoxydation de l'acier ou formées à la suite de réoxydations au contact de l'atosphère) doit respecter certains critères sévères en terme de nombre, de distribution et de typologie. Pour cela il est notamment considéré usuellement comme nécessaire que la teneur en carbone de l'acier soit supérieure à 0,30 % en poids, et que la teneur en silicium soit la plus élevée possible, afin de limiter la possibilité de réoxydations rédhibitoires de l'acier liquide lors de l'élaboration. De telles réoxydations, non maîtrisées, conduiraient à une augmentation de la population d'inclusions d'oxydes et à une perte de contrôle de leur composition et de leur morphologie, qui détérioreraient leurs propriétés mécaniques.

De plus, pour faciliter l'utilisation de ces aciers dans des milieux pollués, la composition chimique de l'acier doit être adaptée pour résister, en fonctionnement, à une température de l'ordre de 200°C. Notamment, la composition chimique est ajustée pour que la dureté en surface de la pièce reste supérieure à 60 HRC dans ces conditions d'utilisation. Le document EP-A-0 972 090 expose des principes conduisant à cette adaptation et un exemple de nuance obtenue en conséquence.

Les aciers utilisés pour les roulements nécessitent une telle dureté de surface élevée pour résister aux fortes sollicitations en service, et aussi limiter les risques d'indentation de la surface par des indents provenant du milieu de fonctionnement pollué. Cette dureté est acquise :

- soit par la voie d'une trempe directe de la totalité d'une pièce réalisée à partir d'aciers à haute teneur en carbone, de type 100Cr6 ou équivalent ;
- soit en utilisant des aciers dits « de cémentation », à plus faible teneur nominale en carbone, mais auxquels on fait subir des traitements thermochimiques de cémentation ou de carbonitruration pour augmenter leur teneur en carbone, donc leur dureté, uniquement dans leurs couches superficielles qui seront les plus sollicitées lors de l'utilisation de la pièce ; la teneur en carbone dans la couche cémentée ou carbonitrurée peut alors atteindre 1% en poids.

Dans le cadre de l'invention, c'est cette dernière possibilité qui est retenue.

Comme les aciers de cémentation ou de carbonitruration subissent des traitements thermiques et thermochimiques, ils doivent également être aptes à subir ces traitements sans que se produisent d'excessives déformations de la géométrie de la pièce traitée, notamment si le traitement est effectué sur une pièce déjà usinée à des cotes censées être très proches de ses dimensions définitives. De telles déformations pourraient entraîner la nécessité de procéder à un réusinage significatif, d'où une perte de productivité importante. De plus, si ce réusinage doit être effectué sur une pièce déjà durcie superficiellement, il est difficile et conduit à une usure rapide des outils de coupe.

Cette aptitude à minimiser les déformations au cours des traitements thermiques et/ou thermochimiques peut être donnée à ces aciers en utilisant le concept exposé dans les documents EP-A-0 890 653 et WO-A-2005/098070.

Il consiste à améliorer la trempabilité de l'acier tout en faisant en sorte que la courbe Jominy de l'acier en question, qui est tracée (selon la norme (ISO 642) en mesurant après austénitisation la dureté $J_x$ de la pièce à différentes distances de sa surface égales à x mm, soit la plus linéaire possible (c'est-à-dire dépourvue de point d'inflexion significatif). De plus, l'application de ce principe permet, pour un même temps de traitement, d'augmenter la profondeur de la couche affectée par le traitement, ce qui est un objectif recherché pour les grosses pièces utilisées en mécanique et pour les roulements de grande dimension utilisés notamment dans le domaine éolien.

Enfin pour des raisons de coût de traitement, la composition chimique des aciers est, de préférence, choisie de manière à réduire les temps de traitement. On peut obtenir ce résultat en imposant une teneur en carbone relativement élevée à l'acier de base, afin de minimiser l'écart entre la composition de base de l'acier et la teneur en carbone visée en surface après traitement.

Le but de l'invention est de proposer aux métallurgistes confrontés à ce type de problématique une composition d'acier optimisée pour satisfaire au mieux toutes les conditions requises, à savoir :

- une durée de vie importante des pièces dans des conditions sévères d'utilisation (conditions limites de lubrification ou lubrification polluée) pour des roulements ou pièces mécaniques de grandes dimensions devant, pour garantir des performances importantes, être traitées thermiquement ou thermochimiquement de manière à durcir leur surface ;
- une suppression, ou au moins une sensible diminution, des réusinages des pièces dus à des déformations trop importantes lors du traitement thermique ou thermochimique ;
- un temps de traitement thermique ou thermochimique aussi réduit que possible.

A cet effet, l'invention a pour objet un acier **caractérisé en ce que** sa composition est, en pourcentages pondéraux :

- $0,19\% \leq C \leq 0,60\%$;
- $0,70\ \% \leq Si \leq 1,10\%$;
- $1,10\% \leq Mn \leq 1,50\ \%$;
- $1\ ,00\ \% \leq Cr \leq 1,50\%$ ;
- traces $\leq Ni \leq 0,30\%$ ;
- $0,10\% \leq Mo \leq 0,30\%$ ;
- $0,001\ \% \leq S \leq 0,020\%$ ;
- traces $\leq \% P \leq 0,025$ ;
- $0,010\% \leq Al \leq 0,045\%$ ;
- $0,01\ \% \leq N \leq 0,03\%$ ;
- $0,010\% \leq Nb \leq 0,045\%$ ;
- optionnellement traces $\leq Bi \leq 0,10\%$ et/ou traces $\leq Pb \leq 0,12\%$ et/ou traces $\leq Te \leq 0,10\%$ et/ou traces $\leq Se \leq 0,02\%$ et/ou traces $\leq Ca \leq 0,0045\%$;

le reste étant du fer et des impuretés résultant de l'élaboration, la composition étant ajustée pour que les valeurs moyennes $J_{3m}$, $J_{11m}$, $J_{15m}$ et $J_{25m}$ de cinq essais Jominy soient telles que :

$$\alpha = \left| J_{11m} - J_{3m} \times 14/22 - J_{25m} \times 8/22 \right| \leq 2,5\ \text{HRC}$$

et

$$\beta = J_{3m} - J_{15m} \leq 9\ \text{HRC.}$$

Sa composition est, de préférence, ajustée pour que

$$\beta = J_{3m} - J_{15m} \leq 8\ \text{HRC.}$$

De préférence :

- $0,35\ \% \leq C \leq 0,40\%$ ;
- $0,80\ \% \leq Si \leq 1,00\%$ ;
- $1,20\% \leq Mn \leq 1,40\ \%$ ;
- $1,20\ \% \leq Cr \leq 1,40\%$ ;
- traces $\leq Ni \leq 0,25\%$ ;
- $0,17\% \leq Mo \leq 0,20\%$;
- $0,001\ \% \leq S \leq 0,010\%$;
- traces $\leq \% P \leq 0,015\%$;
- $0,025\% \leq Al \leq 0,035\%$ ;
- $0,01\ \% \leq N \leq 0,015\%$ ;
- $0,025\% \leq Nb \leq 0,035\%$ ;

De préférence, traces $\leq Bi \leq 0,07\%$ et/ou traces $\leq Pb \leq 0,12\%$ et/ou traces $\leq Te \leq 0,10\%$ et/ou traces $\leq Se \leq$

0,02% et/ou traces ≤ Ca ≤ 0,0045%.

De préférence, Mn ≤ 0,75 + 0,55 Si %.

L'invention a également pour objet une pièce en acier, **caractérisée en ce qu**'elle est réalisée en un acier de la composition précédente.

De préférence elle a subi un traitement de cémentation ou de carbonitruration.

L'invention a également pour objet un roulement en acier, **caractérisé en ce qu**'il est réalisé en un acier de la composition précédente.

Il a de préférence subi un traitement de cémentation ou de carbonitruration.

L'invention a également pour objet une pièce mécanique en acier, **caractérisée en ce qu**'elle est réalisée en un acier de la composition précédente.

Elle a de préférence subi un traitement de cémentation ou de carbonitruration.

Comme on l'aura compris, l'invention repose sur la détermination d'une composition d'acier qui, d'une part, permet aux pièces ainsi constituées de satisfaire aux contraintes qui leur sont imposées dans leurs applications visées, en termes de propriétés mécaniques, et d'autre part leur permet de se déformer de manière minime lors des traitements de trempe et de cémentation ou carbonitruration, la durée de ces traitements étant par ailleurs aussi réduite que possible pour obtenir le résultat final désiré.

Pour cette détermination, on a fait appel aux concepts développés dans les documents EP-A-0 890 653 et WO-A-2005/098070, en les adaptant aux contextes particuliers dont relèvent les applications des aciers selon l'invention, ce qui a conduit à circonscrire la composition de l'acier de l'invention à un domaine très étroit, particulièrement dans sa version préférée.

L'invention va à présent être décrite en référence aux figures annexées suivantes, à savoir :

- la figure 1 qui montre les courbes Jominy de différents aciers de référence et d'exemples d'aciers selon l'invention ;
- la figure 2 qui montre les distributions cumulées des flèches mesurées sur des arbres de boîtes de vitesses réalisés en deux aciers de référence et un acier selon l'invention ;
- la figure 3 qui montre l'influence de la composition de l'acier sur la durée de carbonitruration nécessaire pour obtenir une profondeur carbonitrurée donnée dans le cas de deux aciers de référence et de trois aciers selon l'invention;
- la figure 4 qui montre la résistance au revenu après austénitisation à 850°C d'un acier de référence et de trois aciers selon l'invention.

La teneur en carbone de ces aciers est comprise entre 0,19 et 0,60% en poids, de préférence entre 0,35 et 0,40 % en poids. C'est une des particularités de cet acier dit "moyen carbone" comme cela est déjà préconisé dans la littérature technique pour des applications similaires.

Cette teneur dite "moyen carbone" est utilisée ici pour obtenir une bonne trempabilité, et aussi, dans le cas de l'utilisation de cet acier pour constituer des pièces massives, afin d'obtenir à moindre durée de traitement, donc à moindre coût, une profondeur de la couche cémentée ou carbonitrurée de forte dureté de l'ordre de 0,6 à 0,8 mm, comme cela est classique pour ces applications. En effet, le fait d'augmenter la teneur en carbone de l'acier de base permet de diminuer l'écart entre la teneur nominale de cet acier et la teneur visée en surface après traitement. Ainsi, la quantité de carbone à apporter est inférieure à celle qu'elle aurait été si la teneur en carbone de l'acier de base avait été plus faible.

De plus, dans la variante préférée de l'invention, le fait d'augmenter la valeur de la teneur en carbone au-dessus de 0,30 % (en l'occurrence au-dessus de 0,35 %) permet, et l'homme du métier le sait bien, de protéger l'acier liquide contre la réoxydation lors de l'élaboration, et d'obtenir de ce fait pour un même process d'élaboration appliqué, une plus faible teneur en oxygène de l'acier final. En effet, lorsque l'élaboration est effectuée sous vide comme c'est optimalement le cas, la désoxydation de l'acier liquide est pilotée par le carbone qui forme du CO avec l'oxygène dissous dans l'acier liquide présent en excès. Une teneur en carbone moindre causerait un pilotage de la désoxydation par des éléments tels que l'aluminium, le silicium et le manganèse qui formeraient des inclusions solides risquant de subsister dans l'acier coulé si elles n'ont pas décanté entre la désoxydation et la coulée. Cela contribue à la diminution du nombre d'inclusions d'oxydes non métalliques présentes dans les pièces finales, inclusions qui pourraient être dommageables pour les applications visées.

La teneur en silicium est comprise entre 0,70 et 1,10% en poids, de préférence entre 0,80 et 1,00 % en poids. Dans cette gamme de composition d'ampleur limitée, il s'avère assez aisé d'ajuster la teneur en silicium avec celles des autres éléments de la composition de l'acier visée, de manière à garantir l'absence de point d'inflexion de la courbe Jominy visée.

La valeur minimale fixée à 0,70 %, mieux 0,80%, est justifiée par l'obtention d'une bonne dureté à coeur de la pièce, par la limitation de l'écart de dureté entre la surface et le coeur après traitement de cémentation ou de carbonitruration, ainsi que par la propension qu'à cet élément à permettre de résister à l'adoucissement, donc à la dégradation des propriétés mécaniques de l'acier quand il se trouve soumis pendant de longues durées à des températures au-dessus de 180°C. Cette résistance au revenu en cours d'utilisation est une des caractéristiques qui est demandées à cet acier.

La teneur maximale de 1,10% en poids, mieux 1,00 % en poids, fixée pour le silicium est justifiée par le fait qu'une teneur plus élevée, compte tenu des éléments déjà présents dans l'acier, pourrait favoriser l'apparition de ségrégations lors de la solidification. Cela pourrait nuire à l'homogénéité des propriétés finales visées, ainsi que conduire à une augmentation des temps de cémentation.

La teneur en manganèse est comprise entre 1,10 et 1,50%, mieux entre 1,20 et 1,40% en poids.

Cette gamme limitée est justifiée, notamment sa valeur minimale, par l'obtention de la forme de la courbe Jominy désirée, en conjonction avec les teneurs des autres éléments contenus dans l'acier. Elle est aussi nécessaire pour obtenir une dureté importante (> 60 HRC) dans la couche superficielle après traitement thermochimique.

La valeur maximale pour la teneur en Mn doit aussi, de préférence, être telle que : Mn $\leq$ 0,75 + 0,55 x Si % pour obtenir une bonne coulabilité de l'acier, sans laquelle il devient difficile, par les procédés de coulée continue classiques, d'obtenir un acier suffisamment propre pour que les propriétés demandées à des pièces mécaniques ou des roulements de grandes dimensions soient garanties.

La teneur en chrome est comprise entre 1,00 et 1,50% en poids, mieux entre 1,20 et 1,40 % en poids. Dans cette gamme limitée on peut obtenir la forme de la courbe Jominy désirée en conjonction avec les autres éléments.

La teneur minimale de 1,00%, mieux 1,2 %, permet d'obtenir une bonne dureté à coeur, ce qui minimise la différence de dureté entre le coeur et la surface après traitement des pièces. Aller au-delà de 1,50%, mieux 1,40 % en poids, augmenterait inutilement le coût de l'élaboration sans pour autant apporter des propriétés avantageuses supplémentaires pour les applications visées.

La teneur en nickel est comprise entre des traces et 0,30% en poids, mieux entre des traces et 0,25 % en poids. Cet élément introduit dans des quantités supérieures augmenterait inutilement le coût du métal. Dans la pratique on pourra se contenter de la teneur résultant naturellement de la fusion des matières premières de la coulée, sans ajout volontaire.

La teneur en molybdène est comprise entre 0,10 et 0,30% en poids, mieux entre 0,17 et 0,20 % en poids. Dans cette gamme très limitée de composition, la forme de la courbe Jominy souhaitée est garantie en conjonction avec les autres éléments. Le Mo permet d'augmenter la trempabilité de l'acier.

La teneur en soufre est comprise entre 0,001 et 0,020% en poids, mieux entre 0,001 et 0,010 % en poids. Ces basses teneurs en soufre sont imposées pour garantir un très bon niveau de propreté de l'acier compte tenu des applications exigeantes visées, pour lesquelles la présence possible d'inclusions de sulfures de manganèse serait néfaste.

La teneur en phosphore est comprise entre des traces et 0,025% en poids, mieux entre des traces et 0,015 % en poids. De manière générale, les normes en vigueur tendent à requérir une teneur maximale en phosphore de cet ordre. De plus, au-delà de ces valeurs, il y a un risque de synergie avec le niobium provoquant une fragilisation de l'acier lors de la mise en forme à chaud et/ou de la coulée continue de l'acier sous forme de blooms ou de billettes.

Les teneurs en aluminium, azote et niobium doivent être simultanément contrôlées dans les limites des valeurs précisées ci-dessous. En effet ce sont des éléments qui, en interaction, procurent un contrôle de la finesse du grain du métal. Cette finesse est recherchée pour l'obtention d'une bonne ténacité dans la couche traitée thermochimiquement (par cémentation ou carbonitruration), d'une bonne tenue en fatigue et d'une réduction de la dispersion de la déformation lors de la trempe.

De plus la taille du grain a aussi son importance dans l'obtention de la forme désirée de la courbe Jominy. Le contrôle de la taille de grain est, dans le cas de l'invention, d'autant plus important que l'acier doit être capable de subir un traitement de cémentation ou de carbonitruration à des températures élevées, allant au-delà de 950°C, sans que survienne une croissance excessive du grain. Cette augmentation de température est nécessaire pour permettre une diffusion plus rapide du carbone dans la matrice d'acier, et ainsi raccourcir la durée du traitement, donc finalement le coût de celui-ci.

Ce contrôle se fait principalement par la précipitation de nitrures et carbonitrures d'aluminium et de niobium. Pour l'obtention de ces précipités, il est nécessaire que ces éléments soient présents simultanément en quantités suffisantes, de manière à provoquer une sursaturation locale de ces éléments et induire alors la précipitation des phases souhaitées. Il est aussi nécessaire que la quantité de précipités formés soit suffisante pour que leur efficacité soit optimale.

La teneur en aluminium doit être comprise entre 0,010 et 0,045% en poids, mieux entre 0,025 et 0,035 % en poids. Outre sa fonction de contrôle de la taille du grain précédemment citée, cet élément pilote la désoxydation de l'acier lors des périodes où celui-ci est exposé à l'atmosphère, et influe donc sur sa propreté en termes d'inclusions non métalliques. En dessous du seuil de 0,010%, mieux de 0,025%, les effets sur ces nuances d'aciers ne sont pas suffisants, et au-dessus de 0,045%, mieux de 0,035 %, le degré de propreté pourrait en être affecté pour les applications visées, du fait d'une propension trop élevée à former des inclusions à base d'alumine par réoxydation au contact de l'atmosphère.

La teneur en niobium doit, quant à elle, être comprise entre 0,010 et 0,045%, mieux 0,025 et 0,035 % en poids. En dessous de 0,010%, mieux de 0,025 %, l'efficacité du contrôle du grain n'est pas garantie, et au-dessus de 0,045%, mieux de 0,035 %, l'élaboration de telles nuances d'acier peut être détériorée par l'apparition de criques lors de la coulée continue d'acier, et ce en conjonction avec la teneur en phosphore comme cela a été expliqué précédemment.

Enfin, la précipitation de nitrures ou de carbonitrures est possible grâce à la présence d'azote dont la teneur doit être comprise entre 0,0100 et 0,0300%, mieux entre 0,0110 et 0,0140 % en poids. Cette fourchette de composition est nécessaire à l'obtention de la quantité de précipités nécessaires à maintenir la taille de grain lors des traitements thermochimiques, et une quantité plus importante n'est pas souhaitée pour des raisons de facilité de l'élaboration et de coût.

Si cela apparaît désirable et en fonction de la sévérité des exigences de l'application la pièce, on peut ajouter à l'acier un ou plusieurs des éléments classiquement connus pour améliorer son usinabilité, en respectant le compromis endurance/usinabilité. Plomb, tellure, sélénium, calcium ou bismuth sont des éléments qu'il est possible d'ajouter de façon modérée pour améliorer la transformation par enlèvement de matière. Les teneurs maximales sont 0,10 %, mieux 0,07 % en poids pour Bi, 0,12 % en poids pour Pb, 0,15% en poids, mieux 0,10 % en poids pour Te, 0,030% en poids, mieux 0,020 % en poids pour Se et 0,050% en poids, mieux 0,0045 % en poids pour Ca.

Les autres éléments sont ceux habituellement présents dans l'acier en tant qu'impuretés résultant de l'élaboration, et ne sont pas rajoutés volontairement.

Parmi ces impuretés, il faut en particulier, veiller à ce que la teneur en titane ne dépasse pas 0,005%. En effet, comme l'acier selon l'invention est très riche en azote, au-delà de cette teneur il y aurait un risque de formation de nitrures et/ou de carbonitrures de titane de taille micrométrique, qui d'une part réduiraient la potentialité de formation des nitrures de Nb et Al et donc réduiraient la potentialité de contrôler le grain aux températures de traitement envisagées, et d'autre part pourraient avoir un effet néfaste pour les propriétés visées telles que la durée de vie de la pièce.

Les teneurs optimales données pour les différents éléments sont, de préférence mais pas obligatoirement, à respecter simultanément, notamment pour mieux assurer l'obtention d'une courbe Jominy sans point d'inflexion marqué comme l'exige l'invention. Cependant, les éléments d'usinabilité Bi, Pb, Te, Se et Ca, qui n'ont pas d'influence marquée sur la courbe Jominy, peuvent avoir des teneurs non optimales combinées à tout ou partie des teneurs optimales pour les autres éléments.

L'invention va être à présent illustrée au moyen d'exemples.

Des coulées de laboratoire, élaborées sous vide, ont été réalisées avec différents niveaux de trempabilité correspondant à plusieurs équilibrages chimiques. Le tableau 1 récapitule les analyses chimiques testées, les teneurs des éléments étant exprimées en millièmes de % en poids (sauf N exprimé en ppm). On notera que les différents exemples d'aciers selon l'invention respectent diverses normes établies, mais l'invention ne chevauche que des fractions limitées des domaines spécifiés par ces normes.

Tableau 1 : analyse chimique des coulées testées

| | Nuance | C | Si | Mn | S | P | Ni | Cr | Mo | Al | Nb | N (ppm) |
|---|---|---|---|---|---|---|---|---|---|---|---|---|
| Invention 1 | 41SiMnCr4 | 410 | 1016 | 850 | 16 | 12 | 154 | 830 | 90 | 27 | 4 | 77 |
| Invention 2 | 41MnCrSiMo5 | 410 | 1004 | 1270 | 15 | 12 | 155 | 1117 | 111 | 53 | 4 | 80 |
| Invention 3 | 38MnCrSiMo5 | 380 | 1033 | 1272 | 15 | 12 | 156 | 1131 | 185 | 29 | 5 | 87 |
| Invention 4 | 23MnCrSiMo5 | 227 | 920 | 1287 | 18 | 17 | 201 | 1269 | 200 | 32 | 25 | 170 |
| Référence 1 | 20Cr4 | 220 | 220 | 880 | 12 | 19 | 20 | 1190 | 10 | 21 | 1 | 137 |
| Référence 2 | 23MnCrMo5 | 220 | 280 | 1300 | 12 | 12 | 280 | 1200 | 230 | 20 | 23 | 90 |
| Référence 3 | SAE 4320 | 200 | 260 | 600 | 10 | 11 | 1880 | 500 | 240 | 25 | 2 | 75 |

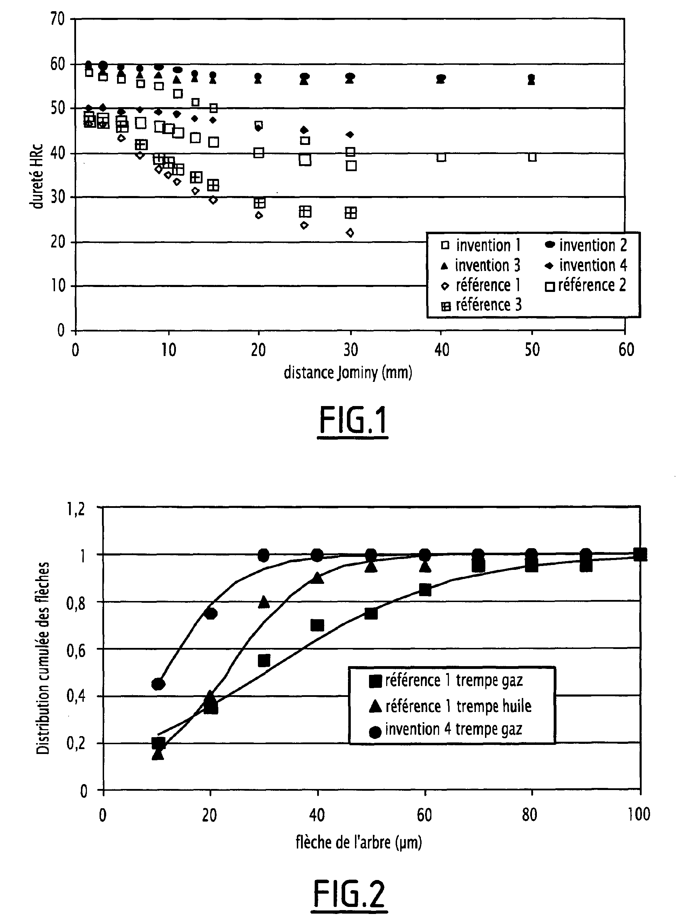

Le résultat des essais Jominy (après austénitisation à 900°C conformément aux normes en vigueur pour la réalisation de ces essais) est reporté sur la Figure 1. On synthétise également sur le tableau 2 le calcul des paramètres $\alpha$ et $\beta$ qui caractérisent respectivement la pente et la linéarité de la courbe Jominy, et sont définis par les formules suivantes :

$$\alpha = \left| J_{11m} - J_{3m} \times 14/22 - J_{25m} \times 8/22 \right|$$

$$\beta = J_{3m} - J_{15m}$$

Il doit être entendu que les valeurs $J_{xm}$ permettant d'établir les courbes Jominy, et qui, mesurées comme habituellement selon la norme (ISO 642) régissant l'essai Jominy, traduisent la dureté de l'acier mesurée à une profondeur de x mm sous la surface de la pièce, sont, dans le cadre de l'invention, la résultante de cinq essais Jominy dont on prend la valeur moyenne pour chaque profondeur de mesure. Cette façon de procéder permet de limiter les erreurs et approximations dans l'établissement de la courbe Jominy qui résultent de la dispersion relativement élevée des mesures effectuées. C'est à cette condition que l'on peut, avec un bon degré de certitude, affirmer que l'acier testé répond ou non aux critères précis définissant l'invention.

Tableau 2 : valeurs des paramètres $\alpha, \beta$ des différentes coulées

|  | Nuance | $\alpha$ | $\beta$ |
|---|---|---|---|
| Invention 1 | 41SiMnCr4 | 1,5 | 7,1 |
| Invention 2 | 41MnCrSiMo5 | 0,2 | 2,3 |
| Invention 3 | 38MnCrSiMo5 | 1,0 | 2,0 |
| Invention 4 | 23MnCrSiMo5 | 0,4 | 2,8 |
| Référence 1 | 20Cr4 | 4,5 | 16,8 |
| Référence 2 | 23MnCrMo5 | 0,1 | 5,5 |
| Référence 3 | SAE 4320 | 3,1 | 14 |

Seules les coulées de l'invention et l'acier de référence 2 remplissent tous les critères de l'invention sur ces points, à savoir $\alpha \leq 2,5$ HRC et $\beta \leq 9$ HRC, mieux $\leq 8$ HRC, ce qui se traduit par des pentes très faibles de leurs courbes Jominy pour les coulées les plus trempantes et l'absence de point d'inflexion marqué.

Une autre donnée essentielle pour les grosses pièces mécaniques réalisées en un acier selon l'invention est une déformation après traitement thermochimique aussi faible que possible, ce qui permet de diminuer les surépaisseurs à imposer aux pièces pour tenir compte des possibles réusinages ultérieurs, et ainsi de diminuer les temps de traitements et les coûts de reprise d'usinage. L'exemple ci-après a été réalisé avec l'acier de référence 2 cité ci-dessus (23 MnCrSiMo5), qui présente des caractéristiques de pente et linéarité de courbes Jominy assez comparables à celles des aciers selon l'invention 2 et 3 (38 et 41MnCrSiMo5), mais décalées vers des duretés plus faibles à cause de l'effet du carbone, qui est moindre dans son cas.

Des arbres de boite de vitesses automobile (de diamètre 35 mm et de largeur 200 mm) ont été filés à froid, cémentés sous basse pression et trempés au gaz pour l'acier 4 selon l'invention et l'un des essais sur l'acier de référence 1. La pression du gaz de trempe a été ajustée pour obtenir les mêmes caractéristiques mécaniques à coeur que les nuances classiquement utilisées pour cette application, Ainsi, pour la nuance à plus forte trempabilité (invention 4), la pression n'est que de 1,5 à 2 bar contre 20 bar pour la référence 1. La référence 1 a été trempée à l'huile comme c'est habituellement le cas pour ce type d'acier. L'augmentation de trempabilité permet donc naturellement de diminuer les pression de trempe (pour une même dureté à coeur visée), et donc de diminuer le gradient thermique dans la pièce, qui est en partie responsable de ses déformations. Ainsi, la nuance de l'invention, du fait de sa forte trempabilité, nécessite des pressions de trempe faibles, ce qui minimise ses déformations. On a reporté sur la figure 2 la distribution cumulée des flèches mesurées sur ces arbres de boite de vitesses. On voit que la famille d'aciers selon l'invention permet de minimiser les déformations par rapport à des aciers de pignonnerie de référence, classiquement utilisés.

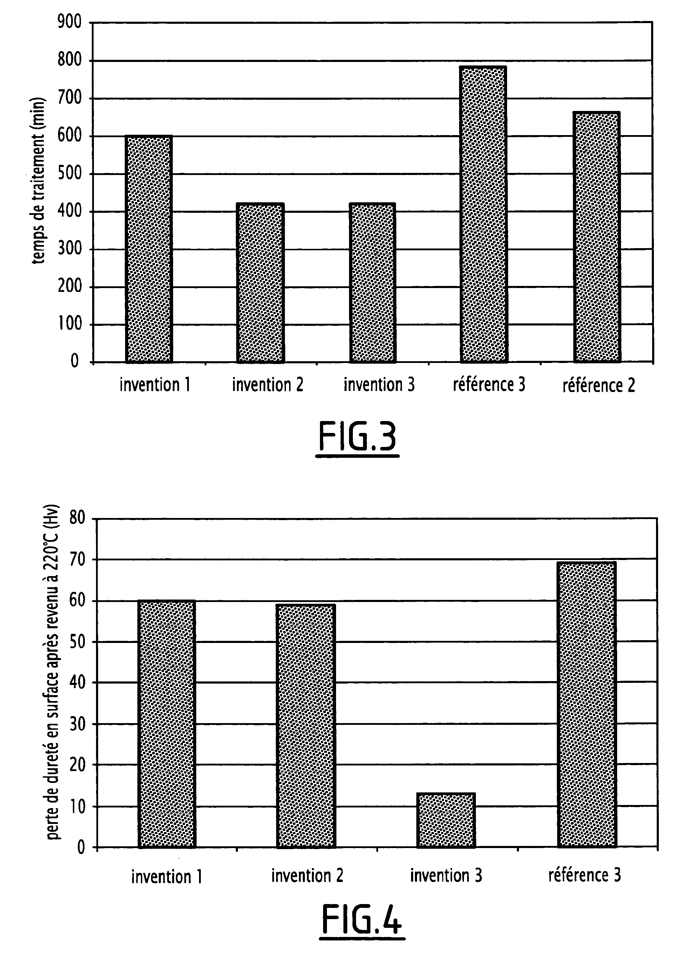

Concernant l'influence de l'invention sur le traitement thermochimique subi par la pièce, des essais de carbonitruration ont été réalisés sur les différentes nuances selon l'invention précédemment décrites, et on a comparé leurs résultats à ceux obtenus avec une nuance de pignonnerie à moyen carbone (référence 2 23MnCrMo5) et une nuance typique pour application aux roulements (référence 3 SAE 4320). On a porté sur la figure 3 le temps de traitement nécessaire pour obtenir la même profondeur trempée.

Les nouvelles nuances permettent de réduire le temps de traitement, entre 25 et 45%, par rapport à la référence 3. L'amélioration est moins marquée par rapport à la référence 2, mais on a vu en quoi cette référence 2 était nettement moins satisfaisante que les aciers de l'invention sur le critère des déformations après trempe.

La tenue en conditions de fonctionnement sévères, incluant notamment des températures élevées et des conditions de lubrification dégradées, impose le développement d'une solution propre présentant une bonne résistance au revenu. L'ajout de C et de Si dans les proportions prescrites permet d'augmenter la micropropreté inclusionnaire de la nuance. La limitation des teneurs en S et P va aussi dans ce sens.

L'ajout de C, Si et Mo permet d'augmenter la résistance au revenu de la martensite, et donc sa tenue en service.

On a porté sur la figure 4 la résistance à un revenu de 220°C après carbonitruration gazeuse, refroidissement lent, austénitisation à 850°C, trempe et revenu à 150°C, mesurée par la perte de dureté occasionnée par le revenu. On prend comme point de comparaison un acier classiquement utilisé pour des roulements, traité thermochimiquement dans les mêmes conditions, à savoir la référence 3 (SAE 4320).

Suivant l'équilibrage analytique des aciers selon l'invention, on perd de 10 à 60 Hv après revenu à 220°C. La nuance de référence perd quand à elle 70 Hv, soit 7 fois plus par rapport à la nuance de l'invention 3 (38MnCrSiMo5) qui procure les meilleurs résultats de ce point de vue.

Les applications des aciers selon l'invention, à l'état brut de transformation ou à l'état cémenté ou carbonitruré, ne sont bien entendu pas limitées aux exemples qui ont été décrits.

**Revendications**

1. Acier **caractérisé en ce que** sa composition est, en pourcentages pondéraux :

   - $0,19\% \leq C \leq 0,60\%$ ;
   - $0,70\% \leq Si \leq 1,10\%$ ;
   - $1,10\% \leq Mn \leq 1,50\%$ ;
   - $1,00\% \leq Cr \leq 1,50\%$ ;
   - traces $\leq Ni \leq 0,30\%$ ;
   - $0,10\% \leq Mo \leq 0,30\%$ ;
   - $0,001\% \leq S \leq 0,020\%$ ;
   - traces $\leq \% P \leq 0,025\%$ ;
   - $0,010\% \leq Al \leq 0,045\%$ ;
   - $0,01\% \leq N \leq 0,03\%$ ;
   - $0,010\% \leq Nb \leq 0,045\%$ ;
   - traces $\leq Ti \leq 0,005\%$ ;
   - optionnellement traces $\leq Bi \leq 0,10\%$ et/ou traces $\leq Pb \leq 0,12\%$ et/ou traces $\leq Te \leq 0,15\%$ et/ou traces $\leq Se \leq 0,02\%$ et/ou traces $\leq Ca \leq 0,0050\%$;

   le reste étant du fer et des impuretés résultant de l'élaboration, la composition étant ajustée pour que les valeurs moyennes $J_{3m}$, $J_{11m}$, $J_{15m}$ et $J_{25m}$ de cinq essais Jominy soient telles que :

   $$\alpha = \left| J_{11m} - J_{3m} \times 14/22 - J_{25m} \times 8/22 \right| \leq 2,5 \text{ HRC}$$

   et

   $$\beta = J_{3m} - J_{15m} \leq 9 \text{ HRC.}$$

2. Acier selon la revendication 1, **caractérisé en ce que** sa composition est ajustée pour que

   $$\beta = J_{3m} - J_{15m} \leq 8 \text{ HRC.}$$

3. Acier selon la revendication 1 ou 2, **caractérisé en ce que**

   - $0,35 \% \leq C \leq 0,40\%$ ;
   - $0,80 \% \leq Si \leq 1,00\%$ ;
   - $1,20\% \leq Mn \leq 1,40 \%$ ;
   - $1,20 \% \leq Cr \leq 1,40\%$ ;
   - traces $\leq Ni \leq 0,25\%$ ;

- 0,17% ≤ Mo ≤ 0,20% ;
- 0,001% ≤ S ≤ 0,010% ;
- traces ≤ % P ≤ 0,015% ;
- 0,025% ≤ Al ≤ 0,035% ;
- 0,01% ≤ N ≤ 0,015% ;
- 0,025% ≤ Nb ≤ 0,035% ;

4. Acier selon l'une des revendications 1 à 3, **caractérisé en ce que** traces ≤ Bi ≤ 0,07% et/ou traces ≤ Pb ≤ 0,12% et/ou traces ≤ Te ≤ 0,10% et/ou traces ≤ Se ≤ 0,02% et/ou traces ≤ Ca ≤ 0,0045%.

5. Acier selon l'une des revendications 1 à 4, **caractérisé en ce que** Mn ≤ 0,75 + 0,55 Si %.

6. Pièce en acier, **caractérisée en ce qu'**elle est réalisée en un acier de composition selon l'une des revendications 1 à 5 et **en ce qu'**elle a subi un traitement de cémentation ou de carbonitruration.

7. Roulement en acier, **caractérisé en ce qu'**il est réalisé en un acier de composition selon l'une des revendications 1 à 5.

8. Roulement selon la revendication 7, **caractérisé en ce qu'**il a subi un traitement de cémentation ou de carbonitruration.

9. Pièce mécanique en acier, **caractérisée en ce qu'**elle est réalisée en un acier de composition selon l'une des revendications 1 à 5.

10. Pièce mécanique selon la revendication 9, **caractérisée en ce qu'**elle a subi un traitement de cémentation ou de carbonitruration.


**Patentansprüche**

1. Stahl, **dadurch gekennzeichnet, dass** seine Zusammensetzung in Gewichtsprozenten ist:

- 0,19% ≤ C ≤ 0,60%;
- 0,70% ≤ Si ≤ 1,10%;
- 1,10% ≤ Mn ≤ 1,50%;
- 1,00% ≤ Cr ≤ 1,50%;
- Spuren ≤ Ni ≤ 0,30%;
- 0,10% ≤ Mo ≤ 0,30%;
- 0,001% ≤ S ≤ 0,020%;
- Spuren ≤ % P ≤ 0,025%;
- 0,010% ≤ Al ≤ 0,045%;
- 0,01% ≤ N ≤ 0,03%;
- 0,010% ≤ Nb ≤ 0,045%;
- Spuren ≤ Ti ≤ 0,005%;
- optional Spuren ≤ Bi ≤ 0,10% und/oder Spuren ≤ Pb ≤ 0,12% und/oder Spuren ≤ Te ≤ 0,15% und/oder Spuren ≤ Se ≤ 0,02% und/oder Spuren ≤ Ca ≤ 0,0050%;

wobei der Rest Eisen und Verunreinigungen ist, die von der Bearbeitung herrühren, wobei die Zusammensetzung so eingestellt ist, dass die Mittelwerte $J_{3m}$, $J_{11m}$, $J_{15m}$ und $J_{25m}$ von fünf Jominy-Versuchen derart sind, dass:

$$\alpha = |J_{11m} - J_{3m} \times 14/22 - J_{25m} \times 8/22| \leq 2,5 \text{ HRC}$$

und

$$\beta = J_{3m}-J_{15m} \le 9 \text{ HRC.}$$

**2.** Stahl nach Anspruch 1, **dadurch gekennzeichnet, dass** seine Zusammensetzung so eingestellt ist, dass

$$\beta = J_{3m}-J_{15m} \le 8 \text{ HRC.}$$

**3.** Stahl nach Anspruch 1 oder 2, **dadurch gekennzeichnet, dass**

- $0{,}35\% \le C \le 0{,}40\%$;
- $0{,}80\% \le Si \le 1{,}00\%$;
- $1{,}20\% \le Mn \le 1{,}40\%$;
- $1{,}20\% \le Cr \le 1{,}40\%$;
- Spuren $\le Ni \le 0{,}25\%$;
- $0{,}17\% \le Mo \le 0{,}20\%$;
- $0{,}001\% \le S \le 0{,}010\%$;
- Spuren $\le \% P \le 0{,}015\%$;
- $0{,}025\% \le Al \le 0{,}035\%$;
- $0{,}01\% \le N \le 0{,}015\%$;
- $0{,}025\% \le Nb \le 0{,}035\%$.

**4.** Stahl nach einem der Ansprüche 1 bis 3, **dadurch gekennzeichnet, dass** Spuren $\le Bi \le 0{,}07\%$ und/oder Spuren $\le Pb \le 0{,}12\%$ und/oder Spuren $\le Te \le 0{,}10\%$ und/oder Spuren $\le Se \le 0{,}02\%$ und/oder Spuren $\le Ca \le 0{,}0045\%$ sind.

**5.** Stahl nach einem der Ansprüche 1 bis 4, **dadurch gekennzeichnet, dass** Mn $\le 0{,}75 + 0{,}55$ Si % ist.

**6.** Teil aus Stahl, **dadurch gekennzeichnet, dass** es aus einem Stahl mit der Zusammensetzung nach einem der Ansprüche 1 bis 5 hergestellt ist, und dass es einer Behandlung des Aufkohlens oder des Karbonitrierens unterworfen wurde.

**7.** Wälzlager aus Stahl, **dadurch gekennzeichnet, dass** es aus einem Stahl der Zusammensetzung nach einem der Ansprüche 1 bis 5 hergestellt ist.

**8.** Wälzlager nach Anspruch 7, **dadurch gekennzeichnet, dass** es einer Behandlung des Aufkohlens oder des Karbonitrierens unterworfen wurde.

**9.** Mechanisches Teil aus Stahl, **dadurch gekennzeichnet, dass** es aus einem Stahl der Zusammensetzung nach einem der Ansprüche 1 bis 5 hergestellt ist.

**10.** Mechanisches Teil nach Anspruch 9, **dadurch gekennzeichnet, dass** es einer Behandlung des Aufkohlens und des Karbonitrierens unterworfen wurde.

**Claims**

**1.** Steel, **characterised in that** the composition thereof is, in percentages by weight:

- $0.19\% \le C \le 0.60\%$;
- $0.70\% \le Si \le 1.10\%$;
- $1.10\% \le Mn \le 1.50\%$;
- $1.00\% \le Cr \le 1.50\%$;
- traces $\le Ni \le 0.30\%$;
- $0.10\% \le Mo \le 0.30\%$;
- $0.001\% \le S \le 0.020\%$;
- traces $\le \% P \le 0.025\%$;

- 0.010% $\leq$ Al $\leq$ 0.045%;
- 0.01% $\leq$ N $\leq$ 0.03%;
- 0.010% $\leq$ Nb $\leq$ 0.045%;
- traces $\leq$ Ti $\leq$ 0.005%;
- optionally traces $\leq$ Bi $\leq$ 0.10% and/or traces $\leq$ Pb $\leq$ 0.12% and/or traces $\leq$ Te $\leq$ 0.15% and/or traces $\leq$ Se $\leq$ 0.02% and/or traces $\leq$ Ca $\leq$ 0.0050%;

the remainder comprising iron and manufacturing impurities, the composition being adjusted such that the mean values $J_{3m}$, $J_{11m}$, $J_{15m}$ and $J_{25m}$ of five Jominy tests are such that:

$$\alpha = |\ J_{11m} - J_{3m} \times 14/22 - J_{25m} \times 8/22\ | \leq 2.5\ HRC$$

and

$$\beta = J_{3m} - J_{15m} \leq 9\ HRC.$$

2. Steel according to claim 1, **characterised in that** the composition thereof is adjusted such that

$$\beta = J_{3m} - J_{15m} \leq 8\ HRC.$$

3. Steel according to claim 1 or 2, **characterised in that**

- 0.35% $\leq$ C $\leq$ 0.40%;
- 0.80% $\leq$ Si $\leq$ 1.00%;
- 1.20% $\leq$ Mn $\leq$ 1.40%;
- 1.20% $\leq$ Cr $\leq$ 1.40%;
- traces $\leq$ Ni $\leq$ 0.25%;
- 0.17% $\leq$ Mo $\leq$ 0.20%;
- 0.001% $\leq$ S $\leq$ 0.010%;
- traces $\leq$ % P $\leq$ 0.015%;
- 0.025% $\leq$ Al $\leq$ 0.035%;
- 0.01% $\leq$ N $\leq$ 0.015%;
- 0.025% $\leq$ Nb $\leq$ 0.035%.

4. Steel according to one of claims 1 to 3, **characterised in that** traces $\leq$ Bi $\leq$ 0.07% and/or traces $\leq$ Pb $\leq$ 0.12% and/or traces $\leq$ Te $\leq$ 0.10% and/or traces $\leq$ Se $\leq$ 0.02% and/or traces $\leq$ Ca $\leq$ 0.0045%.

5. Steel according to one of claims 1 to 4, **characterised in that** Mn $\leq$ 0.75 + 0.55 Si %.

6. Steel component, **characterised in that** it is made from a steel having a composition according to one of claims 1 to 5 and **in that** it has undergone a carburising or carbonitriding treatment.

7. Steel bearing, **characterised in that** it is made from a steel having a composition according to one of claims 1 to 5.

8. Bearing according to claim 7, **characterised in that** it has undergone a carburising or carbonitriding treatment.

9. Steel mechanical component, **characterised in that** it is made from a steel having a composition according to one of claims 1 to 5.

10. Mechanical component according to claim 9, **characterised in that** it has undergone a carburising or carbonitriding treatment.

FIG.1

FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0972090 A
- EP 0890653 A
- WO 2005098070 A